# EUROPÄISCHE PATENTSCHRIFT

(11) **EP 1 137 528 B1**
(45) Veröffentlichungstag und Bekanntmachung des Hinweises auf die Patenterteilung: **20.08.2003**
(21) Anmeldenummer: 99965418.9
(22) Anmeldetag: 30.11.1999
(51) Int. Cl.: B29C 47/64, C08F 6/22

(54) **VERFAHREN ZUR KOAGULATION VON KUNSTSTOFFDISPERSIONEN UNTER VERWENDUNG EINER VORRICHTUNG MIT SCHERELEMENTEN**
METHOD FOR COAGULATING PLASTIC DISPERSIONS USING A DEVICE WITH SHEARING ELEMENTS
PROCEDE DE COAGULATION DE DISPERSIONS DE MATIERES PLASTIQUE A L'AIDE D'UN DISPOSITIF DOTE D'ELEMENTS DE CISAILLEMENT

(30) Priorität: 01.12.1998 DE 19855459
(43) Veröffentlichungstag der Anmeldung: 04.10.2001
(73) Patentinhaber: BASF AKTIENGESELLSCHAFT, 67056 Ludwigshafen (DE)
(72) Erfinder: GÜNTHERBERG, Norbert, D-67346 Speyer (DE); HOFMANN, Jürgen, D-67069 Ludwigshafen (DE); LUDWIG, Alexander, D-69126 Heidelberg (DE); HEINEN, Hartmut, D-68163 Mannheim (DE); EHRMANN, Gerd, D-67146 Deidesheim (DE); BARGHOORN, Peter, D-67169 Kallstadt (DE); KLEINKE, Andreas, D-69121 Heidelberg (DE); GRABOWSKI, Sven, D-67061 Ludwigshafen (DE); NACHTRAB, Rainer, D-67069 Ludwigshafen (DE); CZAUDERNA, Bernhard, D-69493 Hirschberg (DE)
(74) Vertreter: Isenbruck, Günter, Dr.
(86) Internationale Anmeldenummer: EP9909304
(87) Internationale Veröffentlichungsnummer: WO00032376

(56) Entgegenhaltungen:
- US-A- 4 148 991
- US-A- 4 299 952
- US-A- 4 831 116

## Beschreibung

Die Erfindung betrifft die Verwendung einer Vorrichtung mit zumindest einem Scherelement zur im wesentlichen salzfreien Koagulation von Kunststoffdispersionen sowie das mit dieser Vorrichtung durchgeführte Verfahren.

Viele Polymere werden durch Homo- oder Copolymerisation geeigneter Monomere in einem flüssigen Medium z.B. durch Emulsions-, Miniemulsions- oder Mikrosuspensionspolymerisation hergestellt. Das Polymere fällt dabei in Form einer meist wässrigen Feststoffdispersion an, aus der das Polymere abgetrennt werden muß, sofern die Dispersion nicht als solche verwendet werden soll.

Das Abtrennen der Polymeren aus der Dispersion geschieht üblicherweise durch Koagulation. Hierzu sind eine Reihe verschiedener Verfahren bekannt. So können Dispersionen durch Zugabe von starken Elektrolyten koaguliert werden. Hierfür werden zumeist Salze verwendet, die mehrwertige Kationen wie Ca²⁺, Mg²⁺ oder Al³⁺ enthalten. Nachteilig bei dieser Methode ist, daß relativ große Mengen an Fällmitteln im Produkt verbleiben und zu einer Verschlechterung von wichtigen Produkteigenschaften führen. Man ist deshalb gezwungen, das gefällte Polymer mit großen Mengen an Wasser nachzuwaschen, was-zu ökonomischen und ökologischen Problemen führt. Ein weiterer Nachteil der Fällung mit Elektrolyten ist, daß das gefällte Produkt oftmals als Klumpen, der ungefälltes Material oder überschüssiges Fällmittel enthält, oder als sehr feinteiliges Material mit der Schwierigkeit der Abtrennung durch Sedimentation oder Filtration anfällt.

Es ist des weiteren bekannt geworden, Polymerdispersionen dadurch zu koagulieren, daß sie hohen Scherkräften unterworfen werden. Dabei wird die jeweilige Polymerdispersion so lange hohen Scherkräften unterworfen, bis die Polymerpartikel agglomerieren. Bei einem Feststoffgehalt des Polymers oberhalb von 20% kann das so koagulierte Polymer pastös bis krümelig werden.

Aus DE-A-196 54 169 ist ein Verfahren zur Koagulation von Pfropfkautschukdispersion bekannt, bei dem eine Koagulation mittels Scherfällung in einer Stator/Rotor-Anordnung bewirkt wird, wobei sowohl der Stator als auch der innerhalb des Stators rotierende Rotor Schlitze aufweisen, durch die die Dispersion durch die Rotation des Rotors radial von innen nach außen geführt wird. Dadurch wird die Dispersion einer so starken Scherung unterworfen, daß sie koaguliert.

Die DE-A-29 17 321 offenbart ein Verfahren zur Abtrennung von Polymeren, die einen über 100°C liegenden Erweichungsbereich aufweisen, aus einer wässrigen Emulsion, wobei die wässrige Emulsion in einem Extruder durch Scheren und/oder Erhitzen auf Temperaturen über den Erweichungsbereich des Polymeren koaguliert wird, das Koagulat dann zusammengeschmolzen und unter Druck heiß aus dem Extruder ausgetragen wird. In einem nachfolgenden Verfahrensschritt wird dann das Wasser abgetrennt. Das Verfahren ist sehr energieaufwendig und benötigt zur Fällung einen gegenläufig tangierenden Doppelschneckenextruder. Außerdem wird zur Beschleunigung der Koagulation Ammoniumacetat als Hilfsstoff verwendet, was aus Gründen des Umweltschutzes unerwünscht ist.

In der US-A-3,821,348 wird ein Verfahren beschrieben, bei dem Acrylnitril-Copolymerisat-Dispersionen oder -Propfpolymerisat-Dispersionen mit einem hohen Acrylnitril-Gehalt und einem sehr kleinen Gehalt an elastomerem Butadien-Acrylnitril-Kautschuk in einem Waring-Mischer als Schervorrichtung zu einer Paste koaguliert, dann in einem Extruder durch eine feine Düse zu dünnen Stäben verformt und in heißes Wasser gegeben werden. Danach wird das Produkt gewaschen, getrocknet und in einer Preßform bei 150°C zu Stäben ausgeformt.

Ausgehend von diesem Stand der Technik lag der vorliegenden Erfindung die Aufgabe zugrunde, eine Vorrichtung und ein Verfahren zur Koagulation von Kunststoff- oder Kautschukdispersionen bereitzustellen, mit denen eine kostengünstige Koagulation solcher Dispersionen ohne Zugabe chemischer Koagulationsmittel ermöglicht wird.

Gelöst wird diese Aufgabe durch die Verwendung einer Vorrichtung mit zumindest einem Scherelement, das einen Stator und einen innerhalb des Stators angeordneten Rotor aufweist, wobei die zueinander weisenden Oberflächen des Stators und des Rotors jeweils glatt sind oder zumindest der Rotor eine auf seiner Oberfläche ausgebildete und von dieser in Richtung auf den Stator weisende Struktur zeigt, und zwischen dem Stator und dem Rotor ein Spalt mit einer vorherbestimmten Spaltweite ausgebildet ist.

Die Bezeichnung "Spalt" wird im Sinn der vorliegenden Erfindung sehr allgemein und umfassend als beliebiger, zwischen Rotor und Stator ausgebildeter Raum verstanden. Entsprechend kann die vorherbestimmte Spaltweite auch die bei Schneckenelementen sogenannte Gangtiefe (mit)umfassen, die dort definiert ist als (Außendurchmesser einer Schnecke minus dem Durchmesser des Schneckenkerns) /2.

Diese Vorrichtung hat sich zur im wesentlichen salzfreien Koagulation von Kunststoffoder Kautschukdispersionen als sehr betriebssicher erwiesen. Der Aufbau ist grundsätzlich sehr einfach und eine Verstopfungsanfälligkeit wurde nicht festgestellt. Wahlweise kann die zu koagulierende Dispersion über zusätzliche Förderelemente zu der Vorrichtung hin- und nach erfolgter Koagulation von der Vorrichtung wegtransportiert werden. Die Vorrichtung kann jedoch ohne Einschränkung auch ohne solche Förderelemente betrieben werden. Insbesondere ist es nicht erforderlich, über beispielsweise Druckkessel oder Pumpen einen gewissen Vordruck zu gewährleisten, um die Vorrichtung mit der zu koagulierenden Dispersion beaufschlagen zu können.

Unter Kunststoffdispersionen werden dabei solche Dispersionen verstanden, bei denen die Homo- bzw. Copolymere eine Glasübergangstemperatur von oberhalb 0°C aufweisen, während die Glasübergangstemperaturen bei Kautschukdispersionen unter 0°C liegen.

Die vorherbestimmte Spaltweite kann konstant sein, sie kann aber auch jeweils innerhalb des zumindest einen Scherelements variieren. Dabei kann vorgesehen sein, daß der Durchmesser des Rotors in Förderrichtung ab- oder zunimmt. Diese Abnahme oder Zunahme des Durchmessers in Förderrichtung kann mehrfach erfolgen.

Es hat sich als vorteilhaft erwiesen, wenn sich der Durchmesser des Rotors in Förderrichtung verjüngt oder die vorherbestimmte Spaltweite in Förderrichtung abnimmt.

Der Rotor kann mit einer Struktur in Form eines Zahnkranzes ausgebildet sein, dessen Zahnreihen radial kreisförmig um den Rotor angeordnet sind. Gegebenenfalls kann der Stator eine oder mehrere in etwa komplementär ausgebildete Zahnreihen aufweisen. Bei dieser Anordnung erfolgt die Koagulation nach einem anderen Wirkmechanismus als bei glatter Oberfläche des Stators und Rotors. Während dort eine Koagulation durch Einwirkung eines kontinuierlichen Scherfeldes erfolgt, findet beim Einsatz einer Stator-Rotor-Kombination, deren Rotor eine Oberflächenstruktur aufweist oder einer Stator-Rotor-Kombination mit zueinander komplementär ausgebildetem Zahnkranz bzw. Zahnreihen eine permanente Wiederholung der Scherbeanspruchung statt. Die Dispersion entspannt nach dem Passieren eines Rotorzahnes am Stator, um beim folgenden nächsten Zahn erneut einer starken Scherung zu unterliegen. Durch diese Anordnung ergibt sich eine sehr intensive Scherwirkung. Je nach den Anforderungen, die sich entsprechend der zu koagulierenden Dispersion ergeben, kann daher in vorteilhafter Weise zwischen einem glatten Stator-Rotor-System, d.h. einem Stator-Rotor-System mit glatter Oberfläche und einem solchen, bei dem zumindest die Rotor- Oberfläche eine Zahnkranz-Struktur aufweist, gewählt werden.

Die Zahnreihen des Stators und des Rotors können in etwa rechteckförmig ausgebildet sein. Sie können auf dem Rotor auch in etwa sternförmig angeordnet sein. Eine Schrägverzahnung ist ebenso möglich, wobei für diese keine komplementäre Ausgestaltung am Stator erfolgen kann.

Dem Scherelement der erfindungsgemäß verwendeten Vorrichtung kann eine ein- oder mehrgängige Förderschnecke vor- und/oder nachgeschaltet sein. Diese ist vorzugsweise auf der gleichen Welle wie das Scherelement angeordnet. Durch die Verwendung der Förderschnecke läßt sich die Zuführung und der Transport der zu koagulierenden Dispersion in der Vorrichtung sowie der Austrag der koagulierten Dispersion selbstfördernd gestalten.

Die Spaltweite kann innerhalb eines größeren Bereichs variieren, in Abhängigkeit von der zu koagulierenden Dispersion und der gewünschten Produktqualität.

Spaltweiten von etwa 0,05 bis 20 mm liefern gute Ergebnisse und selbst dann, wenn die Spaltweite im unteren Bereich liegt, ist keine Verstopfungsanfälligkeit der Vorrichtung zu beobachten. Als typische Spaltweiten bei einer Stator-Rotor-Anordnung mit strukturierter Oberfläche sind 0,05 bis 20 mm zu nennen, während sie bei einer Stator-Rotor-Kombination mit glatter Oberfläche im Bereich von etwa 0,3 bis 10 mm liegen.

Gemäß einer bevorzugten Verwendung ist das Scherelement ein Schneckenelement, dessen Schnecke den Rotor bildet. Besonders bevorzugt ist dabei eine Schnecke, bei welcher der Durchmesser des Schneckenkems in Förderrichtung zunimmt. Daraus folgt zwangsläufig eine Abnahme der vorherbestimmten Spaltweite, d.h. hier, im Fall einer Schnecke als Rotor, der Gangtiefe. Ein solches Schneckenelement wird als kernprogressive Schnecke bezeichnet.

Das Scherelement in Form eines Schneckenelements vereinfacht den Aufbau der erfindungsgemäß verwendeten Vorrichtung, da die Schnecke zugleich als Förderschnecke und als Scherelement dienen kann. Es hat sich gezeigt, daß durch diese Anordnung zugleich auch die Antriebsleistung erheblich reduziert werden kann, mit der die zu koagulierende Kunststoff- oder Kautschukdispersion, gegebenenfalls im teilkoagulierten Zustand, durch die Schervorrichtung transportiert wird.

Die Erfindung betrifft auch ein Verfahren zur im wesentlichen salzfreien Koagulation von. Kunststoffdispersionen, bei dem die oben näher erläuterte Vorrichtung verwendet wird. Dabei wird die Dispersion durch den Spalt zwischen Stator und Rotor geführt und aufgrund der Rotation des Rotors einer vorherbestimmten Schergeschwindigkeit und Scherdeformation unterworfen und gefällt.

Durch diese Form der Scherfällung kann auf den Zusatz von Koagulantien in Form von starken Elektrolyten verzichtet werden. Das Verfahren ist außerdem kontinuierlich durchführbar.

In einem glatten Scherspalt sind die für die Qualität der Fällung entscheidenden Parameter die Schergeschwindigkeit bzw. die Scherdeformation.

Gemäß einer bevorzugten Ausführungsform liegt die Schergeschwindigkeit zwischen etwa 100 und 100 000 s⁻¹ und die Scherdeformation zwischen etwa 1 und 100 000.

Der Rotor kann mit einer Drehzahl von in etwa 50 bis 10000 UPM, vorzugsweise von in etwa 200 bis 8 000 UPM rotieren. Bei einer Stator-Rotor-Kombination, deren Oberfläche eine Zahnkranz-Struktur aufweist, haben sich ebenfalls Drehzahlen bis 8000 UPM bewährt.

Das erfindungsgemäße Verfahren kann beispielsweise zur Koagulation von Kunststoffdispersionen und bevorzugt von Kautschukdispersionen verwendet werden, die beispielsweise aufgebaut sind aus:
60 bis 100 Gew.-Teilen, bezogen auf Gesamtgewicht der fertigen Dispersion, wenigstens eines einpolymerisierbaren Monomers (Hauptmonomer),
0 bis 35 Gew.-Teilen, vorzugsweise 0 bis 20 Gew.-Teile, wenigstens eines funktionellen Monomers (Comonomer) und
0 bis 5 Gew.-Teile, vorzugsweise 0 bis 3 Gew.-Teile, einer α, β-ungesättigten Mono- oder Dicarbonsäure, vorzugsweise 0 bis 3 Gew.-%.

Das Hauptmonomer ist vorzugsweise ausgewählt aus:
- Estern aus vorzugsweise 3 bis 6 C-Atomen aufweisenden α ,β-monoethylenisch ungesättigten Mono- oder Dicarbonsäuren, wie Acrylsäure, Methacrylsäure, Maleinsäure, Fumarsäure und Itaconsäure, mit im allgemeinen C₁-C₁₂-, vorzugsweise C₁-C₈- und insbesondere C₁-C₄-Alkanolen.
   Derartige Ester sind insbesondere Methyl-, Ethyl-, n-Butyl-, Isobutyl-, tert.-Butyl- und 2-Ethylhexylacrylat und -methacrylat;
- vinylaromatischen Verbindungen, wie Styrol, α-Methylstyrol, α-Chlorstyrol oder Vinyltoluole;
- Vinylestern von C₁-C₁₈-Mono- oder -Dicarbonsäuren, wie Vinylacetat, Vinylpropionat, Vinyl-n-butyrat, Vinylaurat und Vinylstearat;
- Butadien.

Besonders bevorzugte Hauptmonomere sind Methylmethacrylat, Methylacrylat, n-Butylmethacrylat, t-Butylmethacrylat, Ethylacrylat, n-Butylacrylat, 2-Ethylhexylacrylat, Styrol und Vinylacetat.

Geeignete Comonomere sind insbesondere:
- Lineare 1-Olefine, verzweigtkettige 1-Olefine oder cyclische Olefine, wie z.B. Ethen, Propen, Buten, Isobuten, Penten, Cyclopenten, Hexen, Cyclohexen, Octen, 2,4,4-Trimethyl-1-penten gegebenenfalls in Mischung mit 2,4,4-Trimethyl-2-penten, C₈-C₁₀-Olefin, 1-Dodecen, C₁₂-C₁₄-Olefin, Octadecen, 1-Eicosen (C₂₀), C₂₀-C₂₄-Olefin; metallocenkatalytisch hergestellte Oligoolefine mit endständiger Doppelbindung, wie z.B. Oligopropen, Oligohexen und Oligooctadecen; durch kationische Polymerisation hergestellte Olefine mit hohem α-Olefin-Anteil, wie z.B. Polyisobuten. Vorzugsweise ist jedoch kein Ethen oder kein lineares 1-Olefin in das Polymerisat einpolymerisiert.
- Acrylnitril, Methacrylnitril.
- Vinyl- und Allylalkylether mit 1 bis 40 Kohlenstoffatomen im Alkylrest, wobei der Alkylrest noch weitere Substituenten wie eine Hydroxygruppe, eine Amino- oder Dialkylaminogruppe oder eine bzw. mehrere Alkoxylatgruppen tragen kann, wie z.B. Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether bzw. deren Mischungen.
- Acrylamide und alkylsubstituierte Acrylamide, wie z.B. Acrylamid, Methylacrylamid, N-tert.-Butylacrylamid, N-Methyl-(meth)acrylamid.
- Sulfogruppenhaltige Monomere, wie z.B. Allylsulfonsäure, Methallylsulfonsäure, Styrolsulfonat, Vinylsulfonsäure, Allyloxybenzolsulfonsäure, 2-Acrylamido-2-methylpropansulfonsäure, deren entsprechende Alkali- oder Ammoniumsalze bzw. deren Mischungen sowie Sulfopropylacrylat, Sulfopropylmethacrylat.
- C₁- bis C₄-Hydroxyalkylester von C₃- bis C₆-Mono- oder Dicarbonsäuren (siehe oben), insbesondere der Acrylsäure, Methacrylsäure oder Maleinsäure, oder deren mit 2 bis 50 Mol Ethylenoxid, Propylenoxid, Butylenoxid oder Mischungen davon alkoxylierte Derivate, oder Ester von mit 2 bis 50 Mol Ethylenoxid, Propylenoxid, Butylenoxid oder Mischungen davon alkoxylierten C₁- bis C₁₈-Alkoholen mit den erwähnten Säuren (Monomere b₆), wie z.B. Hydroxyethyl-(meth)acrylat, Hydroxypropyl(meth)acrylat, Butandiol-1,4-monoacrylat, Ethyldiglykolacrylat, Methylpolyglykolacrylat (11 EO), (Meth)acrylsäureester von mit 3, 5, 7, 10 oder 30 Mol Ethylenoxid umgesetztem C₁₃/C₁₅-Oxoalkohol bzw. deren Mischungen.
- Vinylphosphonsäure, Vinylphosphonsäuredimethylester u.a. phosphorhaltige Monomere.
- Alkylaminoalkyl(meth)acrylate oder Alkylaminoalkyl(meth)acrylamide oder deren Quaternisierungsprodukte, wie z.B. 2-(N,N-Dimethylamino)ethyl(meth)acrylat, 3-(N,N-Dimethylamino)-propyl(meth)acrylat, 2-(N,N,N-Trimethylammonium)ethyl(meth)acrylat-chlorid, 2-Dimethylaminoethyl(meth)acrylamid, 3-Dimethylaminopropyl(meth)acrylamid, 3-Trimethylammoniumpropyl(meth)acrylamid-chlorid.
- Allylester von C₁- bis C₃₀-Monocarbonsäuren.
- N-Vinylverbindungen, wie N-Vinylformamid, N-Vinyl-N-methylformamid, N-Vinylpyrrolidon, N-Vinylimidazol, 1-Vinyl-2-methylimidazol, 1-Vinyl-2-methyl.imidazolin, N-Vinylcaprolactam, Vinylcarbazol. 2-Vinylpyridin, 4-Vinylpyridin.
- Diallyldimethylammoniumchlorid, Vinylidenchlorid, Vinylchlorid, Acrolein, Methacrolein.
- 1,3-Diketogruppen enthaltende Monomere wie z.B. Acetoacetoxyethyl(meth)acrylat oder Diacetonacrylamid, harnstoffgruppenhaltige Monomere, wie Ureidoethyl(meth)acrylat, Acrylamidoglykolsäure, Methacrylamidoglykolatmethylester.
- Silylgruppen enthaltende Monomere wie z.B. Trimethoxysilylpropylmethacrylat.
- Glycidylgruppen enthaltende Monomere wie z.B. Glycidylmethacrylat.

Für das erfindungsgemäße Verfahren der Koagulation sind neben normalen Emulsionen besonders Pfropfkautschukdispersionen geeignet, die durch Pfropfung der Elastomeren mit den Monomeren für die Pfropfhülle zumindest in der letzten Verfahrensstufe der Pfropfpolymerisation in wässriger Emulsion hergestellt wurden.

Unter Pfropfkautschuken werden dabei insbesondere solche Pfropfpolymere verstanden, bei denen auf Teilchenkeme aus weichem Kautschuk harte Thermoplaste bildende Monomere, wie insbesondere Styrol, Acrylnitril und/oder Methylmethacrylat als Pfropfhülle oder Pfropfschale aufgepfropft werden, was durch Polymerisation oder Copolymerisation der Monomeren für die Pfropfhülle in Gegenwart der Kautschukteilchen erfolgt. Als weiche Kautschuke eignen sich elastomere Polymere und/oder Copolymere mit Glasübergangstemperaturen von unter - 10°C und bevorzugt von unter - 30°C. Besonders geeignet sind elastomere 1,3-Dien-Homo- und Copolymere, wie Butadien-, Isopren- oder Chloropren-Homo- und Copolymere, bevorzugt Butadien-Kautschuk, sowie elastomere Acrylester-Homo- und/oder -Copolymere mit den genannten niedrigen Glasübergangstemperaturen. Elastomere Acrylesterpolymere und 1,3-Dien-Homo- und -Copolymere sind für die erfindungsgemäß koagulierten Pfropfkautschuke bevorzugt, wie Homo- und -Copolymere von C₄- bis C₈-Alkylacrylaten, insbesondere von n-Butylacrylat und/oder 2-Ethylhexylacrylat. Beispiele von bevorzugten Comonomeren der Alkylacrylate sind vernetzende Monomere mit mindestens zwei nichtkonjugierten C=C-Doppelbindungen, wie Diallylmaleat, Diallylphthalat, Diacrylate und Dimethacrylate von Diolen, wie 1,4-Butandiol oder 1,6-Hexandiol usw., sowie Allylmethacrylat oder Dihydrodicyclopentadienylacrylat, die insbesondere in einer Menge von 0,5 bis 10 Gew.-% der Gesamtmonomerenmenge bei der Elastomerenherstellung verwendet werden, femer polare Monomere, wie Acrylsäure, Methacrylsäure, Maleinsäureanhydrid, Acrylamid, Methacrylamid, N-Methylolacrylamid oder -Methacrylamid und deren Alkylether. Der Anteil der Elastomeren im Pfropfkautschuk beträgt im allgemeinen 30 bis 85 Gew.-%, wobei nach dem erfindungsgemäßen Verfahren solche Propfkautschuke ohne Probleme koaguliert werden können, deren Elastomerenanteil mehr als 30 Gew.-%, bezogen auf den Gesamtfeststoffgehalt, beträgt.

Als Monomere für Aufpolymerisieren der Pfropfhülle oder Pfropfschale sind insbesondere Monomere und deren Mischungen geeignet, die harte Polymerisate bzw. Copolymerisate mit Glasübergangstemperaturen von über + 50°C bilden. Die Art des bzw. der Monomeren richtet sich dabei weitgehend nach der Art der Thermoplasten, die nach Abmischung mit dem Pfropfkautschuk die Polymermatrix bilden und zu denen zur Erzielung einer feinen Zweiphasen-Verteilung der Pfropfkautschuke in der Matrix die Propfhülle eine gewisse Verträglichkeit bzw. Affinität aufweisen soll. Besonders geeignete und übliche Monomere sind solche mit 8 bis 12 C-Atomen, wie Styrol, α-Methylstyrol, sowie Styrole und α-Methylstyrole, die am Benzolkem ein oder mehrere Alkyl-, insbesondere Methylgruppen als Substituenten tragen. Sie können die alleinigen Monomeren für die Herstellung der Pfropfhülle sein oder im Gemisch mit anderen Monomeren, wie Methylmethacrylat, Methacrylnitril und bevorzugt Acrylnitril verwendet werden, wobei die Methacrylnitril- und/oder Acrylnitril-Monomereinheiten in der Pfropfhülle einen Anteil von 0 bis 45 Gew.-% und bevorzugt 10 bis 40 Gew.-% der Pfropfhülle aufweisen. Bevorzugt sind Mischungen von Styrol mit 10 bis 40 Gew.-% der Gesamtmonomerenmenge an Acrylnitril. Als bevorzugte weitere Monomere für die Herstellung der Pfropfhülle seien auch Methacrylsäureester und Acrylsäureester genannt, von denen Methylmethacrylat bevorzugt ist, das auch als alleiniges oder in überwiegender Menge verwendetes Monomeres für die Herstellung der Pfropfhülle verwendet werden kann. Geeignete Comonomere für die Herstellung der Pfropfhülle sind auch Maleinsäureanhydrid, Maleinsäureimid, N-Phenylmaleinsäureimid, Acrylsäure und Methacrylsäure.

Beispiele für die Herstellung derartiger, fiir die Anwendung der Scherfällung geeigneter Dispersionen sind z. B. in DE-C-2 60 135, DE-A-3 22 75 55, DE-A-3 14 93 57, DE-A-3 14 93 58 und DE-A-3 41 41 18 beschrieben, worauf hier verwiesen wird. Diese Beispiele haben jedoch exemplarischen Charakter. Die Anwendung der erfindungsgemäßen Scherfällung ist nicht auf die hier genannten Beispiele von Dispersionen beschränkt.

Im folgenden soll die erfindungsgemäße Vorrichtung anhand von in der Zeichnung dargestellten Ausführungsformen und das erfindungsgemäße Verfahren anhand von Versuchsbeispielen näher erläutert werden.

Es zeigen:
- Figur 1:: Eine schematische Darstellung der erfindungsgemäßen Vorrichtung mit einem Scherelement,
- Figur 2 a-f:: Verschiedene Ausbildungen des Rotors, die den Übergang von einem glatten Rotor zu einem auf seiner Oberfläche in Form von Zahnreihen strukturierten Rotor schematisch zeigen,
- Figur 3:: eine schematische teilweise geschnittene Darstellung eines Scherelements mit einer Rotor/Stator-Kombination mit einer Oberflächenstrukturierung in Form von Zahnreihen,
- Figur 4:: eine schematische Darstellung eines Rotors mit Schrägverzahnung,
- Figur 5:: eine schematische Darstellung einer für die Beispiele 1 bis 4 verwendeten Abwandlung der erfindungsgemäßen Vorrichtung,
- Figur 6:: eine schematische Darstellung einer für die Beispiele 5 bis 9 verwendeten weiteren Abwandlung der erfindungsgemäßen Vorrichtung,
- Figur 7:: eine schematische Darstellung einer für das Beispiel 18 verwendeten weiteren Abwandlung der erfindungsgemäßen Vorrichtung und
- Figur 8:: eine schematische Darstellung einer weiteren bevorzugten Ausgestaltung der erfindungsgemäß verwendeten Vorrichtung mit einer kernprogressiven Schnecke als Rotor.

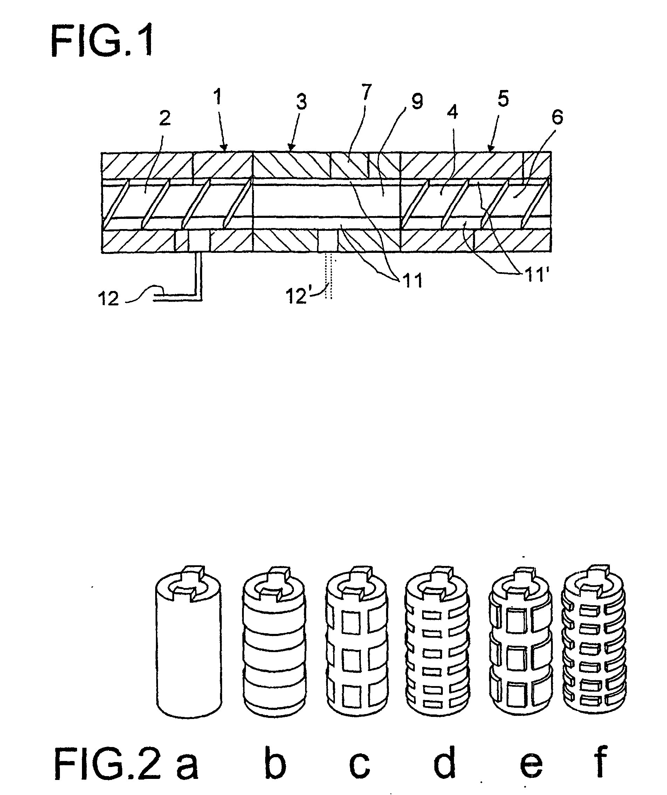

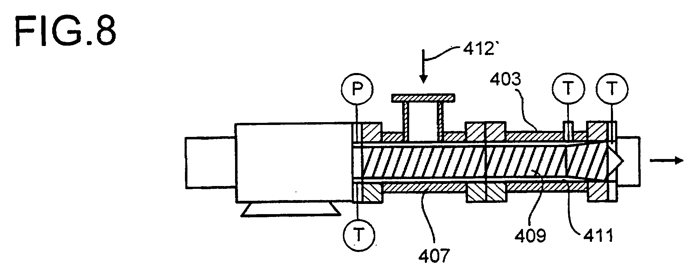

In Fig. 1 ist ein grundsätzlicher Aufbau der erfindungsgemäß verwendeten Vorrichtung für die im wesentlichen salzfreie Koagulation von Kunststoffdispersionen schematisch dargestellt. Eine demgegenüber noch weiter vereinfachte Abwandlung des grundsätzlichen Aufbaus der Vorrichtung wird im folgenden außerdem unter Bezugnahme auf Fig. 8 ab Beispiel 20 beschrieben.

Die Vorrichtung gemäß Fig. 1 besteht aus einer insgesamt mit 1 bezeichneten Einzugszone für die zu koagulierende Dispersion, die ein Schneckenelement 2 als Förderelement aufweist, der eigentlichen Scherzone mit dem insgesamt als 3 bezeichneten Scherelement und einer Austragszone, die insgesamt mit 5 bezeichnet ist und ebenfalls ein Schneckenelement 6 aufweist. Einzugszone 1 und Austragszone 5 sind jeweils optional und können daher auch entfallen. Das Scherelement 3 weist einen feststehenden, zylindrisch ausgebildeten Stator 7 und einen sich innerhalb des Stators 7 drehenden, ebenfalls zylindrisch ausgebildeten Rotor 9 auf. In der schematischen Darstellung gemäß Fig. 1 haben sowohl Stator 7 als auch Rotor 9 eine glatte Oberfläche. Zwischen dem Stator 7 und dem Rotor 9 wird ein Spalt 11 ausgebildet, der eine definierte vorherbestimmte Spaltweite aufweist.

Die zu koagulierende Dispersion wird radial in die erfindungsgemäße Vorrichtung eingeführt. Dabei kann sie über die Zuleitung 12 in die Einzugszone 1 und von dort axial in das Scherelement 3 oder direkt über die Zuleitung 12' (hier gestrichelt dargestellt) in den Spalt 11 eingeführt werden.

Wenn eine Einzugszone 1 vorgesehen ist, in deren Bereich die Dispersion eingeführt werden soll, dann wird sie bevorzugt über zumindest ein Schneckenelement 2 axial durch den zwischen Stator 7 und Rotor 9 gebildeten Spalt 11 gefördert. Auch der Abtransport geschieht dann, wenn die Austragszone 5 vorgesehen ist, vorzugsweise über zumindest ein Schneckenelement 6.

Bei Zugabe der Dispersion über Leitung 12' direkt in den Spalt 11 wird die Förderung durch ein in Fig. 1 nicht näher dargestelltes externes Förderorgan oder mit Hilfe eines statischen Drucks gewährleistet.

Meßstellen für Druck und/oder Temperatur können wahlweise in der Einzugszone 1, der durch das Scherelement 3 gebildeten Scherzone und/oder der Austragszone 5 vorgesehen sein.

Innerhalb des Scherelements 3 ist der Rotor 9 auf einer drehbar gelagerten und in Fig. 1 nicht näher dargestellten Antriebswelle montiert. Durch die Rotation des Rotors 9 wird die Dispersion so hohen Scherkräften unterworfen, daß sie koaguliert. Die Spaltweite ist in der Vorrichtung gemäß Figur 1 konstant. Sie kann aber auch innerhalb des Scherelementes 3 variieren, was dadurch bewirkt wird, daß der Durchmesser des Rotors 9 in Förderrichtung ein- oder mehrfach abnimmt oder zunimmt.

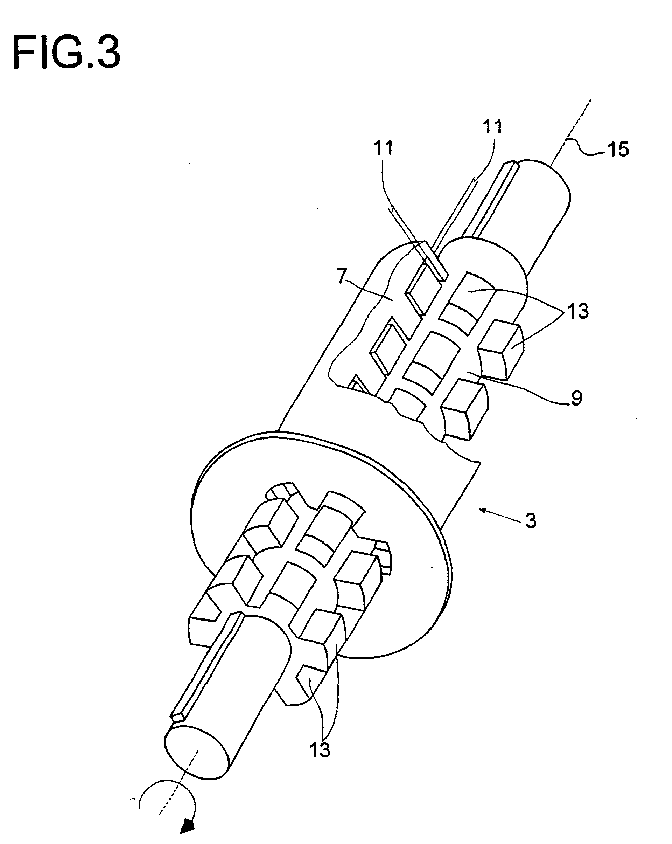

In den Figuren 2a bis 2f ist jeweils ein Rotor 9 dargestellt, dessen Oberflächenstruktur von einer glatten Ausbildung der Oberfläche (Figur 2a) zu einer Oberflächenstruktur in Form von Zahnreihen unterschiedlicher Höhe variiert (Fig. 2c - 2f). Dabei sind als Oberflächenstruktur auf dem Rotor 9 radiale Zahnreihen 13 vorgesehen, die sternförmig um die in Fig. 3 dargestellte Rotationsachse 15 der Vorrichtung angeordnet sind. Der jeweils zu den Rotoren 9 der Figuren 2c bis 2f gehörige Stator 7 ist ebenfalls als Zahnkranz ausgebildet und besteht aus Zahnreihen 13, die radial kreisförmig um die nicht dargestellte Rotorwelle angeordnet sind, so daß sich eine komplementäre Ausgestaltung des Stators 7 zu dem Rotor 9 ergibt.

Dies ist schematisch in Fig. 3 dargestellt, wobei der Rotor 9 und der Stator 7 jeweils eine Oberflächenstrukturierung in Form von Zahnreihen 13 aufweisen.

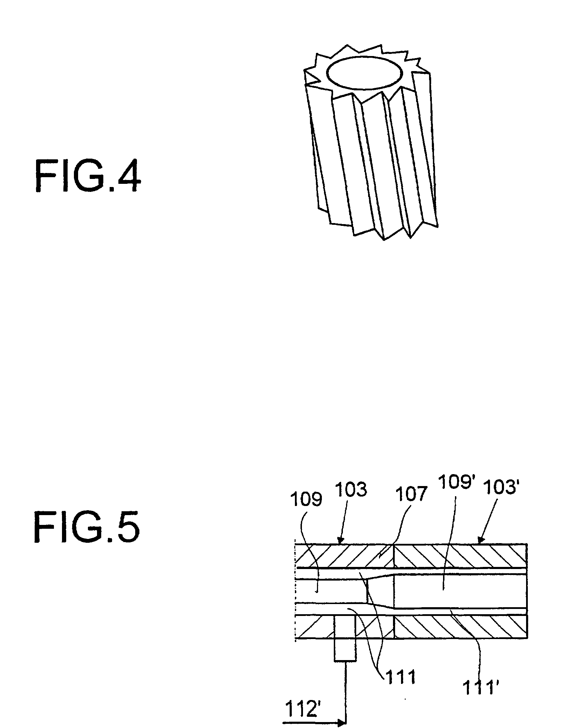

In den Fig. 4 ist eine weitere Ausgestaltung einer Oberflächenstrukturierung des Rotors 9 in Form einer Schrägverzahnung dargestellt. Hier weist der Stator 7 jedoch jeweils eine glatte Oberfläche auf. Neben den hier erläuterten und in den beigefügten Fig. 2 und 4 dargestellten Oberflächenstrukturierungen von Rotor 9 und gegebenenfalls Stator 7 sind eine Vielzahl weiterer Ausgestaltungen möglich. So kann die Oberfläche des Rotors 9 im wesentlichen glatt ausgebildet sein, aber eine Strukturierung in Form von Noppen aufweisen oder die in Fig. 2 dargstellten Zahnreihen können in einer Diagonalgeometrie angeordnet sein. Eine solche Geometrie können auch die einzelnen Zähne aufweisen, die dann beispielsweise statt in einer Rechteck-Geometrie rautenförmig ausgebildet sind. Der jeweils zu der Anordnung gehörende Stator 7 ist komplementär zu dem Rotor oder glatt ausgebildet. Die hier beschriebenen Oberflächenstrukturierungen haben lediglich exemplarischen Charakter.

Die folgenden Versuchsbeispiele wurden unter Verwendung dieser allgemein erläuterten Vorrichtung durchgeführt. Im folgenden wird daher nur auf Modifikationen des Aufbaus der Vorrichtung und gegebenenfalls Ausgestaltungen der Stator/Rotor-Kombination 7, 9 eingegangen.

### Beispiele 1 bis 4

### Herstellung eines Propfkautschuks

### a) Herstellung der Grundstufe aus Polybutadien

Butadien wurde in wässriger Emulsion polymerisiert, wie dies im einzelnen bereits in der DE-A-31 49 046 auf Seite 15, in den Zeilen 5 bis 34 angegeben ist, worauf hier ausdrücklich verwiesen wird. Der so erhaltene Polybutadien-Latex wies einen Feststoffgehalt von in etwa 40 Gew.-% und eine mittlere Teilchengröße d₅₀ von in etwa 80 nm auf.

### b) Agglomeration der Polybutadien-Grundstufe und Propfung mit Styrol-Acrylnitril

In einem Reaktor mit Rührer und Temperaturmeßstelle wurden unter Rühren 50 kg des unter a) hergestellten Polybutadien-Latex vorgelegt, nach Aufheizen auf etwa 75°C wurde 1 kg eines Agglomerier-Latex aus etwa 96 Gew-% Ethylacrylat und etwa 4 Gew.-% Methacrylamid (mit einem Feststoffgehalt von etwa 10 Gew.-%) zugefügt. Es wurde ein teil- agglomerierter Polybutadien-Latex mit bimodaler Teilchengrößenverteilung und einer mittleren Teilchengrößenverteilung von d₅₀ von 220 nm erhalten.

Dem so agglomerierten Latex wurden bei etwa 75°C 0,2 kg Kaliumstearat und 0,025 kg Kaliumpersulfat zugefügt. Nach Zugabe von 1,47 kg Styrol und 0,63 kg Acrylnitril wurde in etwa 15 Minuten lang polymerisiert und danach innerhalb von 3 weiteren Stunden eine Mischung aus 7,35 kg Styrol und 3,15 kg Acrylnitril zugegeben. Anschließend wurden 0,025 kg Kaliumpersulfat zugefügt und weitere 1,5 Stunden bei etwa 75°C gerührt.

### c) Koagulation der gemäß a) und b) hergestellten Dispersion

Die Koagulation der unter a) und b) hergestellten Dispersion wurde gemäß dem erfindungsgemäßen Verfahren durchgeführt. Die dabei verwendete Vorrichtung ist in Fig. 5 dargestellt. Solche Vorrichtungsmerkmale von Fig. 5, die mit denen in Fig. 1 vergleichbar sind, werden mit gleichen, jedoch um 100 erweiterten Bezugszahlen versehen.

Die verwendete Vorrichtung weist keine Einzugszone 1 auf, so daß die zu koagulierende Dispersion direkt radial über Zuleitung 112' und mittels eines außerhalb der Vorrichtung herrschenden statischen Druckniveaus oder einer Pumpe auf den Spalt 111 gegeben wurde. Wie Fig. 5 zeigt, wurden zwei miteinander gekoppelte Scherelemente 103, 103' verwendet und die Dispersion in das erste Scherelement 103 gefördert, das aus einem glatten Stator 107 und einem glatten Rotor 109 besteht und eine Vorkoagulation der Dispersion bewirkt. Die Spaltweite beträgt in diesem ersten Scherelement 103 in etwa 4,5 mm. Von dort aus gelangt die Dispersion in das zweite Scherelement 103', das ebenfalls aus einem glatten Stator 107' und einem glatten Rotor 109' besteht Der Durchmesser des Rotors 109 nimmt vor dem Übergang von dem ersten Scherelement 103 zu dem zweiten Scherelement 103', und damit in Förderrichtung, zu.

Die Spaltweite des Spaltes 111' des zweiten Scherelements 103' beträgt 0,5 oder 1 mm und stellt einen weiteren Koagulationsbereich dar. Daher ist nur diese Spaltweite in Tabelle 1 angegeben. Die Drehzahlen, mit denen Rotor 109 und 109' rotieren, sind in Tabelle 1 angegeben. Nach Durchlaufen des zweiten Scherelementes 103' wird die koagulierte Dispersion ohne Verwendung einer Austragszone direkt ausgetragen. Die Länge eines jeden Scherelementes 103, 103' beträgt etwa 90 mm und der Durchmesser des Stators 107 bei beiden Scherelementen 103, 103' etwa 30 mm. Die weiteren Verfahrensparameter sind in Tabelle 1 angegeben.

**Tabelle 1**

| **Versuchs-Nr.** | **Spaltweite** | **Drehzahl** | **Durchsatz** | **Bemerkung** |
|---|---|---|---|---|
| 1 | 1 mm | 2400 UPM | 22 kg/h | Koagulation |
| 2 | 0,5 mm | 2431 UPM | 11 kg/h | Koagulation |
| 3 | 1 mm | 1173 UPM | 27 kg/h | Koagulation |
| 4 | 1 mm | 911 UPM | 92 kg/h | keine Koagulation |

### Beispiele 5 bis 9:

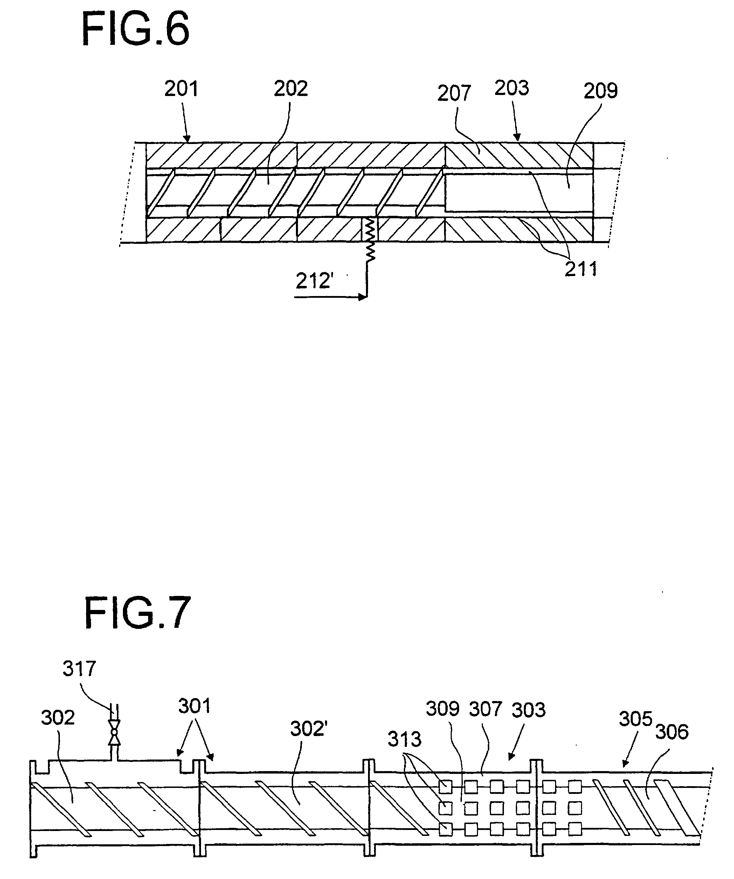

Bei den nachfolgend beschriebenen Beispielen 5 bis 9 wurde wieder gemäß den schon in den Beispielen 1 bis 4 beschriebenen Herstellungsstufen a) und b) Verfahren und die so erhaltene Dispersion nach dem erfindungsgemäßen Verfahren koaguliert. Die hierbei verwendete Vorrichtung ist in Fig. 6 dargestellt. Es werden wieder solche Elemente, die mit denen in Fig. 1 vergleichbar sind, mit gleichen, jedoch um 200 erweiterten Bezugszahlen versehen.

Die Vorrichtung weist eine Einzugszone 201 mit einer Länge von etwa 180 mm auf und ist in diesem Bereich mit einem Schneckenelement 202 für die Förderung der über Leitung 212 zugeführten und zu koagulierenden Dispersion ausgerüstet. Dadurch wird die Dispersion in das Scherelement 203 gefördert, das aus einem glatten Stator 207 und einem glatten Rotor 209 besteht, die einen Spalt 211 mit einer Spaltweite von etwa 0,5 mm oder 1 mm bilden. Die Länge des Scherelementes 203 beträgt etwa 90 mm und der Innendurchmesser des Stators 207 etwa 30 mm. Nach Durchlaufen des Scherelementes 203 wird die koagulierte Dispersion direkt, ohne Verwendung einer Austragszone, ausgetragen. Tabelle 2 zeigt die Ergebnisse der Koagulation unter Angabe der jeweiligen Drehzahl des Rotors 209.

**Tabelle 2**

| **Versuchs Nr.** | **Spaltweite** | **Drehzahl** | **Durchsatz** | **Bemerkung** |
|---|---|---|---|---|
| 5 | 1 mm | 5170 UPM | 33 kg/h | Koagulation |
| 6 | 1 mm | 2430 UPM | 30 kg/h | Koagulation |
| 7 | 1 mm | 3650 UPM | 43 kg/h | Koagulation |
| 8 | 0,5 mm | 2428 UPM | 33 kg/h | Koagulation |
| 9 | 0,5 mm | 1190 UPM | 25 kg/h | Koagulation |

### Beispiele 10 bis 13:

Die Koagulation der Dispersionen, die hergestellt wurden wie in den Beispielen 1 bis 4 unter a) und b) angeben, wurde in einer Vorrichtung durchgeführt, die der in Figur 1 schematisch dargestellten entspricht. Dabei beträgt die Länge der Einzugszone 1, die ein förderndes Schneckenelement 2 aufweist, in etwa 90 mm. Daran schließt sich das Scherelement 3, das aus dem glatten Stator 7 und dem ebenfalls glatten Rotor 9 besteht, an. Die Spaltweite des in dem Scherelement 3 ausgebildeten Spaltes 11 beträgt 1 mm. An das Scherelement 3 schließt sich eine Austragszone 5 an, die ebenfalls ein förderndes Schneckenelement 6 aufweist. Die Dispersion wird direkt auf den Spalt 11 des Scherelements 3 gegeben und durch Rotieren des Rotors 9 mit den in Tabelle 3 angebenen Drehzahlen durch Einwirkung der Scherkräfte koaguliert. Die Länge des Scherelementes 3 beträgt etwa 90 mm und der Innendurchmesser des Stators 7 etwa 30 mm. Die Ergebnisse sind in Tabelle 3 angegeben.

**Tabelle 3**

| **Versuchs Nr.** | **Spaltweite** | **Drehzahl** | **Durchsatz** | **Bemerkung** |
|---|---|---|---|---|
| 10 | 1 mm | 3660 UPM | 20 kg/h | Koagulation |
| 11 | 1 mm | 2430 UPM | 31 kg/h | Koagulation |
| 12 | 1 mm | 2420 UPM | 42 kg/h | Koagulation |
| 13 | 1 mm | 3500 UPM | 79 kg/h | Koagulation |

### Beispiele 14 bis 17:

### Herstellung und Koagulation einer Propfkautschukdispersion mit elastomerem Polyacrylat als Propfgrundlage.

a) 160 Teile eines Gemisches aus 98% Butylacrylat und 2% Dihydrodicyclopentadienylacrylat wurden in 1500 Teilen Wasser unter Zusatz von 5 Teilen des Natriumsalzes einer C12-C18-Paraffinsulfonsäure, 3 Teilen Kaliumperoxidisulfat, 3 Teilen Natriumhydrogencarbonat und 1,5 Teilen Natriumdiphosphat unter Rühren auf 60°C erwärmt. 15 Minuten nach Beginn der Polymerisationsreaktion wurden innerhalb von 3 Stunden weitere 840 Teile der Monomerenmischung zugegeben. Nach Beendigung der Monomerenzugabe wurde die Emulsion noch 1 Stunde bei 60°C gehalten. Die Glasübergangstemperatur des so erhaltenen Elastomers beträgt -42°C.

2100 Teile der Emulsion wurden mit 1150 Teilen Wasser und 2,7 Teilen Kaliumperoxodisulfat versetzt und unter Rühren auf 65°C erwärmt. Nach Erreichen dieser Temperatur werden innerhalb von 3 Stunden 560 Teile eines Gemisches aus 75% Styrol und 25% Acrylnitril zudosiert. Nach Beendigung der Zugabe wird der Ansatz noch etwa 2 Stunden bei etwa 65°C gehalten. Die Glasübergangstemperatur eines Copolymeren aus 75% Styrol und 25% Acrylnitril beträgt 111°C.

Die Koagulation der so hergestellten Dispersion wird in einer Vorrichtung durchgeführt, wie sie auch für die Beispiele 5 bis 7 verwendet und dort unter Bezugnahme auf Fig. 6 beschrieben wurde. Die Versuchsergebnisse sowie die jeweilige Drehzahl des Rotors 209 sind in Tabelle 4 angegeben.

**Tabelle 4**

| **Versuchs Nr.** | **Spaltweite** | **Drehzahl** | **Durchsatz** | **Bemerkung** |
|---|---|---|---|---|
| 14 | 0,5 mm | 1180 UPM | 21 kg/h | Koagulation |
| 15 | 0,5 mm | 2420 UPM | 18 kg/h | Koagulation |
| 16 | 0,5 mm | 3660 UPM | 20 kg/h | Koagulation |
| 17 | 0,5 mm | 980 UPM | 110 kg/h | keine vollständige Koagulation |

### Beispiel 18:

### Herstellung einer weiteren Propfkautschukdispersion mit Polybutadien als Propfgrundlage

In einer Lösung von 0,6 Teilen tert. Dodecylmercaptan, 0,7 Teilen Natrium-C₁₄-Alkylsulfonat als Emulgator, 0,2 Teilen Kaliumperoxodisulfat und 0,2 Teilen Natriumdicarbonat in 80 Teilen Wasser wurden bei 65°C 60 Teile Butadien bis zu einem Monomerenumsatz von 98% polymerisiert. Im so erhaltenen Latex hatte das Polybutadien eine mittlere Teilchengröße von 100 nm und wurde daher durch Zusatz von 25 Teilen einer 10%-igen Emulsion eines Copolymeren aus 96% Ethylacrylat und 4% Methacrylamid agglomeriert, wobei sich eine mittlere Teilchengröße von 350 nm einstellte. Die Glasübergangstemperatur des Polybutadiens beträgt -85°C.

Zum Produkt wurden 40 Teile Wasser, 0,4 Teile Natrium-C14-Alkylsulfonat und 0,2 Teile Kaliumperoxodisulfat zugegeben.

40 Teile einer Mischung von 70% Styrol und 30% Acrylnitril wurden innerhalb von 4 Stunden allmählich zugegeben und der Ansatz unter Rühren bei 75°C gehalten. Der Monomerenumsatz war praktisch quantitativ. Die Glasübergangstemperatur eines Copolymerisats aus 70% Styrol und 30% Acrylnitril beträgt in etwa +105°C.

Die so hergestellte Dispersion wurde nach dem erfindungsgemäßen Verfahren in einer Vorrichtung koaguliert, die in Fig. 7 dargestellt ist. Solche Elemente von Fig. 7, die mit denen in Fig. 1 vergleichbar sind, werden mit gleichen, jedoch um 300 erweiterten Bezugszahlen versehen.

Dabei besteht die Einzugszone 301 aus dem eingängigen Förderelementen 302. An die Einzugszone 301 schließt sich das Scherelement 303 an, das jedoch nicht aus einem glatten Stator 307 und Rotor 309 besteht, sondern eine Stator/Rotor-Kombination 307, 309 aufweist, in der der Stator 307 als Zahnkranz ausgebildet ist und aus Zahnreihen besteht, die radial kreisförmig um die nicht näher dargestellte Rotorwelle angeordnet sind. Der Rotor 309 besteht aus radialen Zahnreihen 313, die komplementär zu den Zahnreihen des Stators 307 ausgebildet und sternförmig um die Rotationsachse der Vorrichtung angeordnet sind. Dabei greifen der Stator 307 und der Rotor 309 in der Weise ineinander, daß ein in Figur 7 nicht ausdrücklich dargestellter Spalt 311 mit einer Spaltbreite von 0,5 mm gebildet wird.

An das Scherelement 303 schließt sich die Austragszone 305 in Form einer zweigängigen Förderschnecke an.

Wahlweise können hier, wie auch bei den zuvor geschilderten Ausgestaltungen der erfindungsgemäßen Vorrichtung Zuführleitungen 317, 317', 317" für Lösungsmittel, wie Wasser, und/oder Additive in der Einzugszone 301, dem Scherelement 303 und/oder der Austragszone 305 vorgesehen sein. Die Zuführleitungen 317 ', 317 " sind aus Gründen der Übersichtlichkeit in Fig. 7 nicht mehr dargestellt.

Die Drehzahl des Rotors 309 wurde auf etwa 8 000 UPM eingestellt. Mit einem Durchsatz von 240 kg/h wurde eine vollständige Koagulation der beschriebenen Dispersion in einem störungsfreien Verlauf der Vorrichtung erzielt. Nach Beendigung des Versuchs war keine Restdispersion mehr im Produkt feststellbar, was als Beweis für eine vollständige Fällung zu werten ist.

### Beispiel 19

### Fällung einer Kunststoffdispersion durch Scherung

Eine Dispersion aus Poly(n-Butylacrylat-co-Styrol) mit Styrol/n-Butylacrylat = 50/50, Feststoffgehalt = 39,1 %, Teilchengröße d50 = 182 nm wurde mit der in den Beispielen 10 - 13 beschriebenen Apparatur gefällt.

**Tabelle 5**

| **Versuch** | **Spaltweite** | **Drehzahl** | **Bemerkung** |
|---|---|---|---|
| 18 | 1 mm | 4400 UPM | Koagulation |

### Beispiele 20 bis 24:

Die in den Beispielen 14 bis 17 genannten Propfkautschukdispersionen mit elastomerem Polyacrylat als Pfropfgrundlage wurden außerdem mit der nachfolgend beschriebenen und in Fig. 8 schematisch dargestellten abgewandelten Vorrichtung koaguliert.

Im folgenden wird daher im wesentlichen auf die Änderungen im Aufbau der Vorrichtung eingegangen. Dabei sind solche Elemente von Fig. 8, die mit denen von Fig. 1 vergleichbar sind, mit gleichen, jedoch um 400 erweiterten Bezugszahlen versehen.

Als wesentlicher Unterschied zwischen der Ausführungsform der erfindungsgemäßen Vorrichtung gemäß Fig. 1 und der Abwandlung gemäß Fig. 8 ist die Tatsache zu nennen, daß die Fällung der jeweiligen Kunststoff- bzw. Kautschukdispersion und deren Förderung durch die Schervorrichtung zusammen und gleichzeitig in einem Scherelement 403 stattfinden, das aus einem feststehenden, zylindrisch ausgebildeten Stator 407 und einem Rotor 409 in Form einer Schnecke gebildet wird, wobei der Durchmesser des Schneckenkerns in Förderrichtung zunimmt und im Ausführungsbeispiel 93,5 - 105 mm beträgt. Der Durchmesser des Stegs beträgt 109,5 mm und die Schnecke weist eine Länge von 110 mm auf. Der zwischen dem Stator 407 und Rotor 409 ausgebildete Spalt 411 mit vorherbestimmter definierter Spaltweite wird daher bei diesem Ausführungsbeispiel durch die Gangtiefe der Schnecke bestimmt. Daraus, daß der Durchmesser des Schneckenkerns in Förderrichtung zunimmt, folgt, daß die vorherbestimmte Spaltweite bzw. die Gangtiefe einer solchen kernprogressiven Schneckenanordnung in Förderrichtung abnimmt.

Die zu koagulierende Dispersion wird bei diesem Ausführungsbeispiel radial über die Zuleitung 412' in das Scherelement 403 geführt. Wie schon bei Ausführungsbeispiel 1, wird die Zugabe der Dispersion durch ein in Fig. 8 nicht näher dargestelltes externes Förderorgan oder mit Hilfe eines statischen Drucks gewährleistet. Dabei sind Meßstellen für Druck und/oder Temperatur in der durch das Scherelement 403 gebildeten Scherzone wahlweise vorgesehen. Diese sind in Fig. 8 jeweils mit P für die Druckmeßstelle(n) und T für die Temperaturmeßstelle(n) angedeutet. Der Durchmesser der Scherapparatur betrug 110 mm.

**Tabelle 6**

| **Versuchs Nr.** | **Drehzahl** | **Durchsatz** | **Bemerkung** |
|---|---|---|---|
| 20 | 1000 UPM | 600 kg/h | koaguliert vollständig |
| 21 | 2000 UPM | 1000 kg/h | koaguliert vollständig |
| 22 | 2700 UPM | 1100 kg/h | koaguliert vollständig |
| 23 | 1500 UPM | 500 kg/h | koaguliert vollständig |
| 24 | 1700 UPM | 800 kg/h | koaguliert vollständig |

## Patentansprüche

1. Verwendung einer Vorrichtung mit zumindest einem Scherelement (3; 103, 103'; 203; 303; 403), das einen Stator (7; 107; 207; 307; 407) und einen innerhalb des Stators (7; 107; 207; 307; 407) angeordneten Rotor (9; 109, 109'; 209; 309; 409) aufweist, wobei die zueinander weisenden Oberflächen des Stators (7; 107; 207; 307; 407) und des Rotors (9; 109, 109'; 209; 309; 407) jeweils glatt sind oder zumindest der Rotor eine auf seiner Oberfläche ausgebildete und von dieser in Richtung auf den Stator (7; 107; 207; 307; 407) weisende Struktur zeigt, und zwischen dem Stator (7; 107; 207; 307; 407) und dem Rotor (9; 109, 109'; 209; 309; 407) ein Spalt (11; 111, 111'; 211; 311; 411) mit einer vorherbestimmten Spaltweite ausgebildet ist, zur im wesentlichen salzfreien Koagulation von Kunststoff- oder Kautschukdispersionen.

2. Verwendung nach Anspruch 1, **dadurch gekennzeichnet, daß** der Durchmesser des Rotors (9; 109, 109'; 209; 309; 409) in Förderrichtung abnimmt oder zunimmt.

3. Verwendung nach Anspruch 1, **dadurch gekennzeichnet, daß** die vorherbestimmte Spaltweite in Förderrichtung abnimmt.

4. Verwendung nach Anspruch 1, **dadurch gekennzeichnet, daß** der Rotor (9; 109, 109'; 209; 309) mit einer Struktur in Form eines Zahnkranzes ausgebildet ist, dessen Zahnreihen (13; 313) radial kreisförmig um den Rotor (9; 109, 109'; 209; 309) angeordnet sind.

5. Verwendung nach Anspruch 4, **dadurch gekennzeichnet, daß** die Zähne des Rotors (9; 109, 109'; 209; 309) in etwa rechteckförmig ausgebildet sind.

6. Verwendung nach Anspruch 4, **dadurch gekennzeichnet, daß** die Zahnreihen (13; 313) auf dem Rotor (9; 109, 109'; 209; 309) in etwa sternförmig angeordnet sind.

7. Verwendung nach Anspruch 4, **gekennzeichnet durch** eine Schrägverzahnung.

8. Verwendung nach einem der Ansprüche 1 bis 7, **dadurch gekennzeichnet, daß** dem Scherelement (3; 103, 103'; 203; 303) eine ein- oder mehrgängige Förderschnecke vor- und/oder nachgeschaltet ist.

9. Verwendung nach einem der Ansprüche 1 bis 7, **dadurch gekennzeichnet, daß** die Spaltweite 0,05 bis 20 mm beträgt.

10. Verwendung nach einem der Ansprüche 1 bis 3, **dadurch gekennzeichnet, daß** das Scherelement (403) ein Schneckenelement ist, dessen Schnecke den Rotor (409) bildet.

11. Verfahren zur im wesentlichen salzfreien Koagulation von Kunststoff- oder Kautschukdispersionen unter Verwendung der Vorrichtung gemäß einem der Ansprüche 1 bis 10, bei dem die Dispersion durch den Spalt (11; 111, 111'; 211; 311; 411) zwischen Stator (7; 107; 207; 307; 407) und Rotor (9; 109, 109'; 209; 309; 409) geführt und durch Rotieren des Rotors (9; 109, 109' 209; 309; 409) mit vorherbestimmter Schergeschwindigkeit und Scherdeformation gefällt wird.

12. Verfahren nach Anspruch 11, **dadurch gekennzeichnet, daß** die Schergeschwindigkeit etwa 100 bis 100 000 s⁻¹ und die Scherdeformation etwa 1 bis 100 000 beträgt.

13. Verfahren nach Anspruch 11 oder 12, **dadurch gekennzeichnet, daß** der Rotor (9; 109, 109'; 209; 309; 409) mit einer Drehzahl von etwa 50 bis 10 000 UPM, vorzugsweise von 200 bis 8 000 UPM rotiert.

14. Verfahren nach einem der Ansprüche 11 bis 13, zur Koagulation von Polymerdispersionen.

15. Verfahren nach Anspruch 14 zur Koagulation von Kautschukdispersionen.

16. Verfahren nach Anspruch 14 oder 15 zur Koagulation von Propfkautschukdispersionen.

## Claims

1. The use of an apparatus with at least one shearing module (3; 103, 103'; 203; 303; 403) which has a stator (7; 107; 207; 307; 407) and a rotor (9; 109, 109'; 209; 309; 409) arranged within the stator (7; 107; 207; 307; 407), where the surfaces facing toward one another in the stator (7; 107; 207; 307; 407) and in the rotor (9; 109, 109'; 209; 309; 409) are in each case smooth, or at least the rotor exhibits a structure formed on its surface and facing from this in the direction of the stator (7; 107; 207; 307; 407), and between the stator (7; 107; 207; 307; 407) and the rotor (9; 109, 109'; 209; 309; 409) there is a gap (11; 111, 111'; 211; 311; 411) of predetermined gap width, for essentially salt-free coagulation of plastics dispersions or rubber dispersions.

2. The use as claimed in claim 1, wherein the diameter of the rotor (9; 109, 109', 209; 309; 409) decreases or increases in the direction of conveying.

3. The use as claimed in claim 1, wherein the predetermined gap width decreases in the direction of conveying.

4. The use as claimed in claim 1, wherein the rotor (9; 109, 109', 209; 309) has a toothed-wheel structure, the rows (13; 313) of teeth in which have a circular arrangement radially around the rotor (9; 109, 109', 209; 309).

5. The use as claimed in claim 4, wherein the teeth on the rotor (9; 109, 109', 209; 309) are approximately rectangular.

6. The use as claimed in claim 4, wherein the rows (13; 313) of teeth on the rotor (9; 109, 109', 209; 309) have an approximately star-shaped arrangement.

7. The use as claimed in claim 4, wherein there is a helical arrangement of teeth.

8. The use as claimed in any one of claims 1 to 7, wherein upstream and/or downstream of the shearing module (3; 103, 103'; 203; 303) there is a conveying screw with one or more flights.

9. The use as claimed in any one of claims 1 to 7, wherein the gap width is from 0.05 to 20 mm.

10. The use as claimed in any one of claims 1 to 3, wherein the shearing module (403) is a screw module, the screw of which forms the rotor (409).

11. A process for essentially salt-free coagulation of plastics dispersions or rubber dispersions using the apparatus as claimed in any one of claims 1 to 10, in which the dispersion is passed through the gap (11; 111, 111'; 211; 311; 411) between stator (7; 107; 207; 307; 407) and rotor (9; 109, 109'; 209; 309; 409) and is precipitated by rotation of the rotor (9; 109, 109'; 209; 309; 409) with a predetermined shear rate and shear deformation.

12. A process as claimed in claim 11, wherein the shear rate is from about 100 to 100,000 s⁻¹ and the shear deformation is from about 1 to 100,000.

13. A process as claimed in claim 11 or 12, wherein the rotor (9; 109, 109'; 209; 309; 409) rotates at a rotation rate of from about 50 to 10,000 rpm, preferably from 200 to 8000 rpm.

14. A process as claimed in any one of claims 11 to 13, for coagulating polymer dispersions.

15. A process as claimed in claim 14, for coagulating rubber dispersions.

16. A process as claimed in claim 14 or 15, for coagulating graft-rubber dispersions.

## Revendications

1. Utilisation d'un dispositif comportant au moins un élément de cisaillement (3,103, 103', 203, 303, 403) présentant un stator (7, 107, 207, 307, 407) et un rotor (9, 109, 109', 209, 309, 409) installé à l'intérieur du stator (7, 107, 207, 307, 407), les surfaces du stator (7, 107, 207, 307, 407) et du rotor (9, 109, 109', 209, 309, 409) se faisant face étant à chaque fois lisses, ou bien au moins le rotor présente une structure formée sur l'une de ses surfaces et dirigée depuis celle-ci dans la direction du stator (7, 107, 207, 307, 407), et entre le stator (7, 107, 207, 307, 407) et le rotor (9, 109, 109', 209, 309, 409) il est formé un interstice (11,111, 111', 211, 311, 411) d'une largeur d'interstice prédéterminée, pour la coagulation exempte de sels de dispersions de plastiques ou de caoutchouc.

2. Utilisation selon la revendication 1, **caractérisée en ce que** le diamètre du rotor (9, 109, 109', 209, 309, 409) diminue ou augmente dans la direction du transport.

3. Utilisation selon la revendication 1, **caractérisée en ce que** la largeur d'interstice prédéterminée diminue dans la direction du transport.

4. Utilisation selon a revendication 1, **caractérisée en ce que** le rotor (9, 109, 109', 209, 309) est configuré avec une structure en forme de couronne dentée, dont la rangée de dents (13, 313) est disposée radialement en cercle autour du rotor (9, 109, 109', 209, 309.)

5. Utilisation selon la revendication 4, **caractérisée en ce que** les dents du rotor (9, 109, 109', 209, 309) sont configurées en forme essentiellement carrée.

6. Utilisation selon la revendication 4, **caractérisée en ce que** la rangée de dents (13, 313) est disposée sur le rotor (9, 109, 109', 209, 309) environ en forme d'étoile.

7. Utilisation selon l'une des revendications 1 à 7, **caractérisée par** une denture hélicoïdale.

8. Utilisation selon l'une des revendications 1 à 7, **caractérisée en ce que** l'élément de cisaillement (3,103, 103', 203, 303) est installé en amont et/ou en aval d'une vis transporteuse à un ou plusieurs filets.

9. Utilisation selon l'une des revendications 1 à 7, **caractérisée en ce que** la largeur d'interstice est de 0,05 à 20 mm.

10. Utilisation selon l'une des revendications 1 à 3, **caractérisée en ce que** l'élément de cisaillement (403) est un élément à vis sans fin, dont la vis forme le rotor (409).

11. Procédé de coagulation essentiellement exempte de sels de dispersions de plastiques ou de caoutchouc utilisant le dispositif selon l'une des revendications 1 à 10, dans lequel la dispersion est guidée dans l'interstice (11, 111, 111', 211, 311, 411) entre le stator (7, 107, 207, 307, 407) et le rotor (9, 109, 109', 209, 309, 409) et est coagulée par rotation du rotor (9, 109, 109', 209, 309, 409) avec une vitesse de cisaillement et une déformation de cisaillement prédéterminées.

12. Procédé selon la revendication 11, **caractérisé en ce que** la vitesse de cisaillement est d'environ 100 à 100.000 s⁻¹ et la déformation de cisaillement d'environ 1 à 100.000.

13. Procédé selon la revendication 11 ou 12, **caractérisé en ce que** le rotor (9, 109, 109', 209, 309, 409) tourne à une vitesse de rotation d'environ 50 à 10.000 trs/min., de préférence de 200 à 8.000 trs/min.

14. Procédé selon l'une des revendications 11 à 13 pour la coagulation de dispersions de polymères.

15. Procédé selon la revendication 14 pour la coagulation de dispersions de caoutchouc.

16. Procédé selon la revendication 14 ou 15 pour la coagulation de dispersions de caoutchouc greffé.
